# FASCICULE DE BREVET EUROPEEN

(11) **EP 0 696 116 B1**
(45) Date de publication et mention de la délivrance du brevet: **24.09.2003**
(21) Numéro de dépôt: 95401730.7
(22) Date de dépôt: 21.07.1995
(51) Int. Cl.: H04L 7/033

(54) **Procédé d'échantillonnage d'un signal numérique en série**
Verfahren zum Abtasten eines seriellen digitalen Signals
Method for sampling a serial digital signal

(30) Priorité: 04.08.1994 FR 9409683
(43) Date de publication de la demande: 07.02.1996
(73) Titulaire: BULL S.A., 78430 Louveciennes (FR)
(72) Inventeur: Marbot, Roland, F-78000 Versailles (FR); Cofler, Andrew, F-75015 Paris (FR); Pierre Duplessix, Anne, F-75014 Paris (FR); Le Bihan, Jean-Claude, F-92120 Montrouge (FR); Nezamzadeh-Moosavi, Reza, F-78390 Bois d'Arcy (FR); Couteaux, Pascal, F-95440 Ecouen (FR)
(74) Mandataire: Denis, Hervé

(56) Documents cités:
- US-A- 5 001 729
- PATENT ABSTRACTS OF JAPAN vol. 13, no. 544 (E-855) 6 Décembre 1989 & JP-A-01 223 887 (MATSUSHITA ELECTRIC IND CO) 6 Septembre 1989
- PATENT ABSTRACTS OF JAPAN vol. 8, no. 49 (E-230) 6 Mars 1984 & JP-A-58 204 651 (NIPPON DENKI K.K.) 29 Novembre 1983

## Description

### Domaine technique.

L'invention se rapporte aux procédés d'échantillonnage d'un signal numérique en série. Elle convient plus particulièrement à la transmission numérique à haut débit, supérieure à un gigabit par seconde, et s'applique notamment aux récepteurs d'un système transmission numérique en série, aux systèmes informatiques, par exemple pour la transmission de données entre un processeur et une mémoire ou une antémémoire, aux systèmes de télécommunication à longue distance et les systèmes de communication privés, tels que les réseaux locaux et les grands réseaux (Wide Area Networks), ainsi qu'aux systèmes de téléinformatique. L'invention a pour objet un procédé d'échantillonnage d'un signal en série, comprenant au préalable le calage de phase du signal numérique sur un signal d'horloge. Elle a pour objet corollaire le circuit intégré et le système mettant en oeuvre ce procédé.

### L'art antérieur.

Les documents EP-A-0441684, EP-A-0466591, EP-A-0466592 et EP-A-0466593 se rapportent à un système de transmission de données numériques en série. Le premier document décrit un circuit verrouillé en phase et un multiplicateur de fréquence servant de base à la structure du système de transmission décrit dans les trois autres documents. Ce système a essentiellement le double avantage d'être particulièrement adapté à la transmission numérique à haut débit puisqu'il évite l'emploi classique d'un oscillateur verrouillé en phase (VCO), et d'avoir une structure simple pour un fonctionnement fiable. Le second des documents cités a pour objet un procédé de transmission consistant à ajouter dans les mots transmis (des octets ordinairement) des fronts respectifs servant à la fois de signal de synchronisation et de signal d'horloge. Dans le récepteur, ces fronts servent à reconstituer le signal d'horloge qui a servi à l'émission. En fait, cette technologie a été développée à l'origine pour des systèmes informatiques, et plus particulièrement pour des systèmes multiprocesseurs, où le concepteur maîtrise tous les constituants et peut ainsi rechercher à optimiser les paramètres principaux. Les documents cités traduisent une forme de cette optimisation. Cependant, dans les applications de cette technologie à d'autres domaines, notamment les télécommunications, nul ne maîtrise l'ensemble du système. Dans ces domaines, il est donc indispensable de se conformer à l'une des principales normes du marché, actuellement la norme ATM (Asynchronous Transfer Mode) ou FibreChannel, par exemple. Mais aucune de ces normes n'utilise un front de synchronisation et d'horloge dans chaque mot du signal numérique.

La technique utilisant ces fronts dans le signal numérique a l'avantage de n'imposer aucune contrainte sur le mode de fonctionnement des deux stations distantes qui dialoguent au moyen de ce signal par l'intermédiaire d'une liaison série. Les stations peuvent travailler et émettre sur la liaison à des fréquences différentes. Les systèmes informatiques multiprocesseurs peuvent intégrer des processeurs de provenance diverses et de différentes générations. Dans ce cas, cette hétérogénéité peut être gérée en utilisant cette technique et des protocoles développés à un niveau supérieur. Par contre, en télécommunications, chaque station est séquencée par une horloge interne de grande précision et de fréquence connue, fixée par la norme. L'émetteur et le récepteur fonctionnent donc à cette fréquence. Dans ces conditions, le récepteur connaît la fréquence d'horloge qui a servi à l'émission et n'a plus à reconstituer le signal d'horloge. La seule tâche qui reste au récepteur est de caler en phase le signal numérique reçu sur le signal d'horloge interne. Des fronts sont choisis comme référence dans le signal reçu, par exemple les fronts de synchronisation et d'horloge dans le récepteur du système décrit dans les documents précités, et sont mis en phase avec des fronts correspondants du signal d'horloge. Ce calage étant fait, le récepteur effectue l'échantillonnage du signal numérique après un retard prédéterminé par rapport aux fronts de référence. L'échantillonnage a lieu dans une zone de stabilité maximale du signal suivant chaque front de référence de façon à avoir une détermination optimale de la valeur logique de chaque bit En appelant R la période de récurrence des bits transmis en série au moyen du signal numérique, le retard entre un front du signal reçu et le meilleur instant d'échantillonnage est ordinairement égal à R/2 ou R/2 + nR où n est un nombre entier positif. Ce procédé classique d'échantillonnage présente plusieurs inconvénients.

D'abord, il exige que les horloges aient une fréquence très précise pour assurer une correspondance parfaite entre l'horloge qui a servi à l'émission et l'horloge qui sert à la réception. Cependant, les horloges sont ordinairement faites à partir de quartz, qui présentent certaines dispersions technologiques et certaines dérives selon les conditions d'utilisation (température, etc.). Un écart entre les horloges d'émission et de réception se cumule et perturbe le calage en phase. De plus, entre l'émission et la réception, le signal subit un retard qui dépend de la longueur de la ligne de transmission. Cette longueur est ordinairement très variable et inconnue. Le calage en phase doit donc être très efficace. L'échantillonnage peut donc se produire en dehors d'une zone de stabilité du signal reçu et fournir ainsi une valeur fausse des bits lus. Pour obtenir un échantillonnage correct pour un débit de l'ordre du gigabit par seconde, il faut par exemple actuellement une précision des horloges de l'ordre de 10⁻⁶.

On connaît aussi du document US-A-5001729 un procédé d'échantillonnage d'un signal numérique en série, comprenant un calage de phase du signal numérique sur un signal d'horloge et un échantillonnage du signal numérique, le calage utilisant des instants de test de calage se référant aux instants d'échantillonnage. Plus précisément, le procédé d'échantillonnage consiste à vérifier si un point d'échantillonnage primaire, désigné parmi des points d'échantillonnage, est en phase avec un point d'échantillonnage désiré, déterminé par rapport au signal d'horloge restitué à partir du signal numérique d'entrée et ayant une fréquence multiple du signal numérique d'entrée. Pour cela, le calage utilise un point d'échantillonnage secondaire pour déterminer dans quel quadrant du signal d'horloge le point d'échantillonnage primaire se trouve et pour calculer le sens et la grandeur du déphasage.

### L'invention.

L'invention a pour but de remédier aux défauts de l'échantillonnage classique et d'adapter le système de transmission décrit dans les documents précités aux normes du marché, afin d'associer les avantages de ce système avec ceux des normes. En d'autres termes, l'invention a pour objet un procédé d'échantillonnage pouvant tolérer une moins grande précision des horloges tout en permettant un calage de phase simple, efficace et assurant une reconstitution fiable des données reçues.

Plus précisément, l'invention a pour objet un procédé d'échantillonnage d'un signal numérique en série, tel que défini par la revendication 1.

L'invention a aussi pour objet un récepteur numérique en série tel que défini par la revendication 8 et un système de transmission numérique en série tel que défini par la revendication 14.

Les caractéristiques et avantages de l'invention ressortent de la description qui suit, donnée à titre d'exemple et faite en référence aux dessins annexés, dans lesquels :
- la figure 1 présente un chronogramme illustrant un exemple préféré du procédé d'échantillonnage conforme à l'invention ;
- la figure 2 illustre sous forme partiellement synoptique un système de transmission numérique en série et sous forme schématique un circuit de test de calage de phase incorporé dans le récepteur du système de transmission et mettant en oeuvre le procédé représenté sur la figure 1 ;
- la figure 3 illustre un exemple de réalisation d'un circuit d'échantillonnage mettant en oeuvre le procédé représenté sur la figure 1;
- la figure 4 est un chronogramme servant à illustrer le fonctionnement du circuit d'échantillonnage représenté sur la figure 3 ;
- la figure 5 illustre une variante de réalisation du circuit d'échantillonnage représenté sur la figure 3;
- la figure 6 illustre un circuit de commande de retard de calage ;
- la figure 7 illustre un circuit de détermination des valeurs limites du calage; et
- la figure 8 est un chronogramme d'échantillonnage servant à illustrer une caractéristique possible de l'invention.

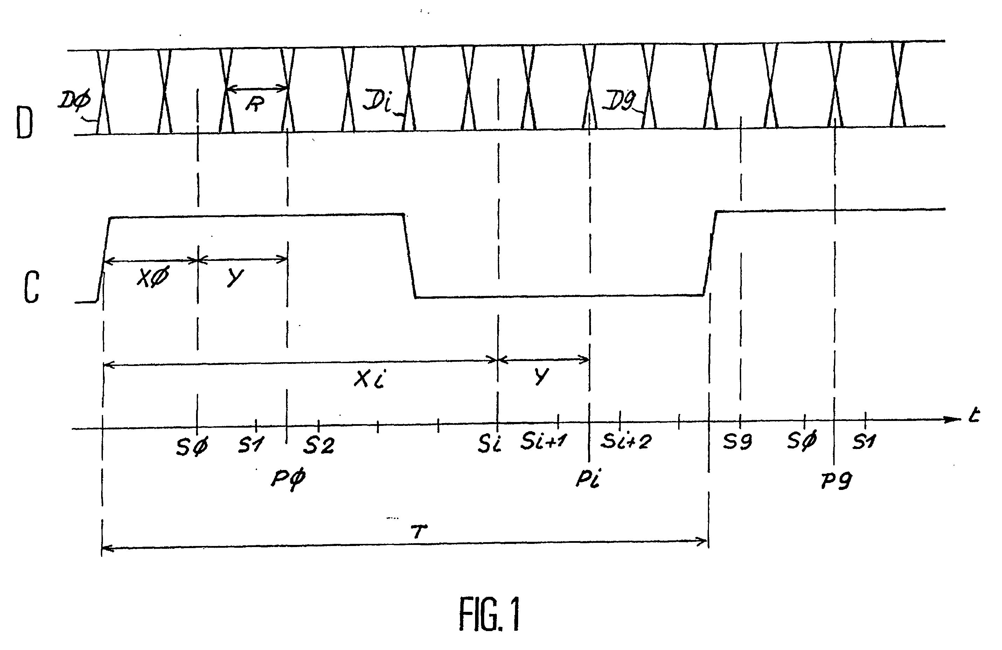

La figure 1 représente schématiquement un signal de données numériques en série D et un signal d'horloge C. Les bits du signal numérique D entrent dans un récepteur à une période de récurrence R et le signal d'horloge C qui sert de référence dans le récepteur a une période T multiple de R, dix fois plus grande dans l'exemple illustré (T = 10R). La figure 1 représente aussi les instants d'échantillonnage S0-S9 récurrents à la période R de dix bits successifs du signal de données de façon à en déterminer la valeur logique. Les dix instants d'échantillonnage Si (S0-S9) se réfèrent à un même front du signal d'horloge C dans la période T, le front montant dans la figure 1, et sont déterminés par rapport à ce front par dix retards respectifs Xi (X0-X9). On trouvera dans les documents antérieurs précités un exemple de génération de ces signaux, où les retards Xi sont définis d'une manière générale par la relation Xi = kR/2 + iR, où k est un nombre entier impair positif non nul et i désigne un nombre entier positif ou nul se référant au nombre de bits du signal D dans chaque période T. Selon l'invention, les retards Xi sont des valeurs variables autour d'une valeur moyenne vérifiant la relation précédente. Dans l'exemple de la figure 1, i = {0, 1, ..., 9} et k = 3, de sorte que les instants moyens d'échantillonnage illustrés Si sont définis par la relation Si = 3R/2 + iR. Cette valeur moyenne suppose que le signal numérique D est parfaitement calé et synchronisé sur le signal d'horloge C, comme cela est illustré dans la figure 1 où le front de référence du signal d'horloge C est en correspondance avec une transition entre deux bits adjacents. On a désigné par Di (D0-D9) les dix transitions successives du signal numérique D qui correspondent respectivement avec les dix instants d'échantillonnage Si. Dans l'exemple illustré où k = 3 et le front montant du signal d'horloge C coïncide avec une transition du signal numérique D, les transitions Di précèdent donc d'une période R et demie (3R/2) les instants d'échantillonnage respectifs Si.

Des instants d'échantillonnage Si servent de référence au calage de phase. Dans l'exemple illustré, un test de calage de phase a lieu à un instant Pi suivant chaque instant d'échantillonnage Si d'un retard Y, tel que Pi = Si + Y, avec Y = k'R/2 où k' est un nombre entier impair positif non nul (k' = 3 dans l'exemple choisi). Si le calage de phase entre les signaux C et D est parfait, à l'instant Pi se produit la transition Di+2 du signal numérique. On supposera que cette transition correspond à un front montant. S'il est en retard sur l'instant Pi, la montée n'a pas encore eu lieu, de sorte que le résultat DPi du test de calage correspondra au niveau bas et indiquera une valeur logique 0, par exemple. Au contraire, s'il est en avance, la montée a déjà eu lieu et le résultat DPi du test de calage aura la valeur logique 1. C'est le cas inverse si le front est descendant. D'autre part, l'échantillonnage aux instants Si+1 et Si+2 renseigne sur la présence ou non d'un front. Le test de calage et l'échantillonnage renseignent donc sur la présence ou non et le sens d'une transition dans le signal numérique D. En d'autres termes,
- si Si+1 ⊕ Si+2 = 0, on sait que le signal n'incorpore pas de front entre ces deux instants d'échantillonnage, de sorte qu'on évite le test de calage.
- si Si+1 ⊕ Si+2 = 1, un front a été détecté par l'échantillonnage. Dans ce cas, le test de calage va déterminer s'il est en retard ou en avance avec les instants de test de calage Pi. Si le front est montant et si DPi = 1, le front est en avance et si DPi = 0 le front est en retard. Réciproquement, si le front est descendant, et si DPi = 0, le front est en avance et si DPi = 1, le front est en retard.

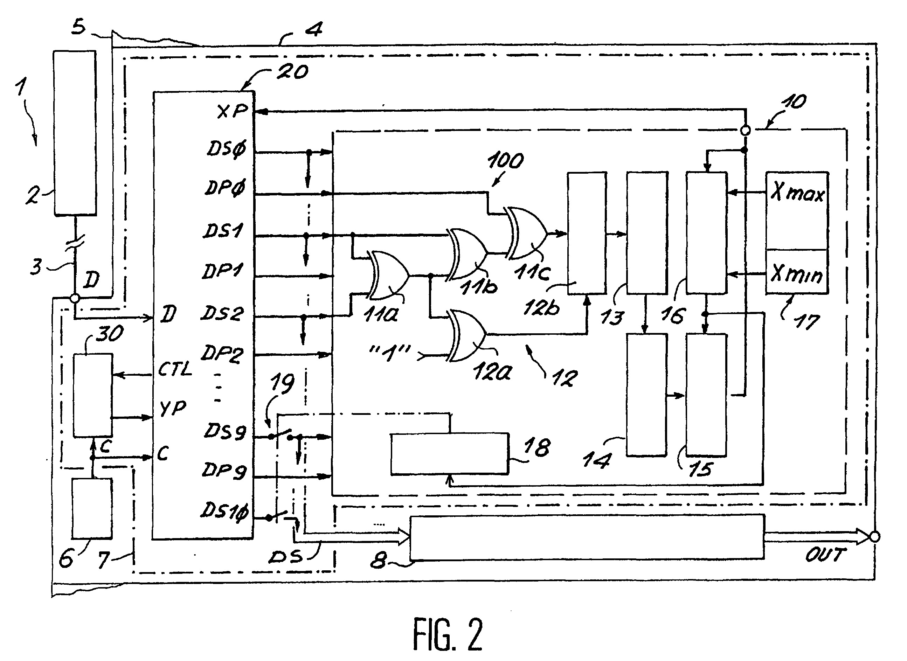

La figure 2 illustre sous forme synoptique un système de transmission numérique en série 1 comprenant un émetteur 2 relié par l'intermédiaire d'une ligne de transmission en série 3 à un récepteur 4. Le récepteur 4 est incorporé dans un circuit intégré 5 et comprend une horloge 6 génératrice du signal d'horloge C, des moyens de calage et d'échantillonnage 7 recevant le signal d'horloge C et le signal numérique D, et un circuit de sortie 8 mettant en forme le signal numérique échantillonné pour que le signal de sortie OUT du récepteur corresponde au signal numérique appliqué à l'émetteur. On trouvera dans les documents précités un exemple de réalisation de ces moyens, dont l'adaptation à la mise en oeuvre de l'invention sera évidente pour l'homme du métier ayant lu la présente demande. Les moyens de calage et d'échantillonnage 7 comprennent un circuit de test de calage 10 et un circuit d'échantillonnage 20 qui mettent en oeuvre le procédé qui vient d'être décrit en référence à la figure 1.

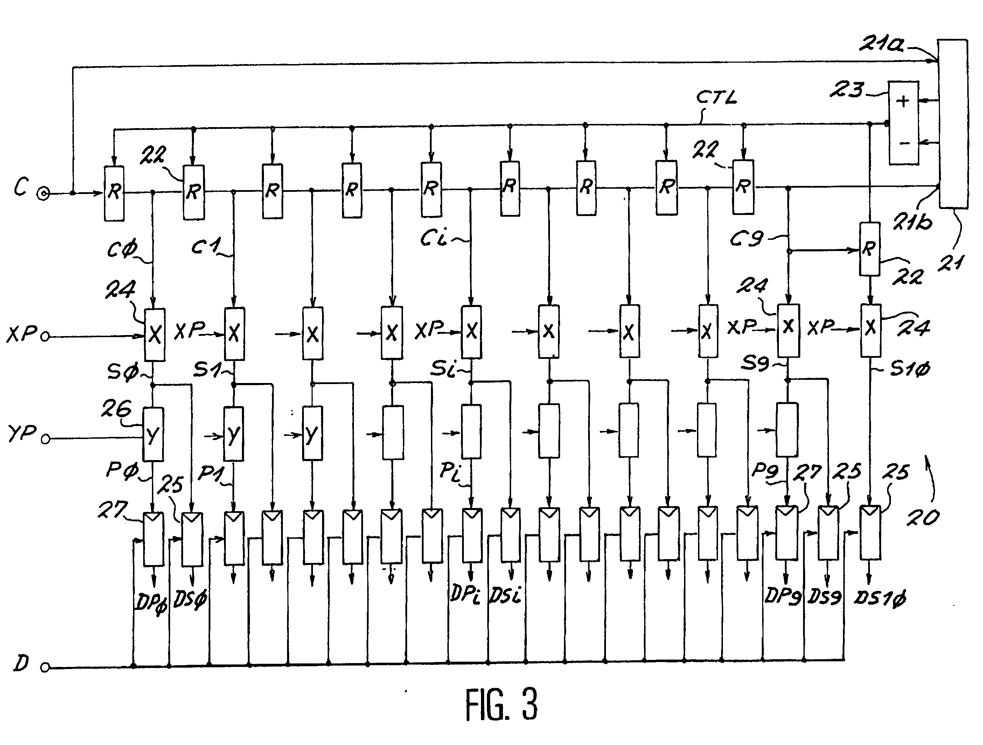

La figure 3 illustre un premier exemple de circuit d'échantillonnage 20 conforme à l'invention, fondé sur la structure employée dans les documents précités pour en obtenir tous les avantages. Le circuit 20 est un circuit verrouillé en phase comprenant: quatre entrées pour, respectivement, le signal d'horloge C, le signal numérique D, un signal de commande XP issu du circuit de test de calage et un signal de commande YP issu d'un circuit 30 ; un comparateur de phase 21 ayant une première entrée 21a recevant directement le signal d'horloge, une seconde entrée 21b recevant le signal d'horloge C par l'intermédiaire d'un premier groupe, dix dans l'exemple illustré, d'éléments de retard 22 connectés en cascade et pourvus chacun d'une borne de commande recevant un signal numérique de commande CTL pour en régler le retard, et une sortie fournissant un signal d'erreur de phase pouvant être fait par exemple de deux signaux respectifs d'incrémentation (+) et de décrémentation (-), comme représenté sur la figure 3, ou d'un seul signal binaire dont les deux états ont les fonctions respectives d'incrémentation et de décrémentation ; et un dispositif de commande numérique tel qu'un compteur-décompteur 23 ayant une entrée recevant le signal d'erreur de phase du comparateur de phase et fournissant le signal numérique de commande CTL aux bornes de commande respectives des éléments de retard 22. Les dix signaux de sortie Ci (C0-C9) des éléments de retard 22 sont appliqués aux entrées respectives d'un second groupe de dix éléments de retard 24 dont les retards respectifs sont réglés sur une même valeur X par le signal de commande XP. Conformément à l'enseignement des documents antérieurs précités, les signaux de sortie Si (S0-S9) des éléments de retard 24 sont appliqués aux bornes de commande respectives de dix bascules d'échantillonnage 25 échantillonnant le signal numérique D aux instants Si pour fournir les signaux d'échantillonnage désirés DSi (DS0-DS9) représentatifs des valeurs logiques de dix bits successifs du signal D. L'ensemble DS des signaux d'échantillonnage DSi est appliqué à l'entrée du circuit de sortie 8, comme indiqué dans la figure 2. Selon l'invention, les signaux de sortie Si (S0-S9) des éléments de retard 24 sont aussi appliqués aux entrées respectives d'un troisième groupe de dix éléments de retard 26 dont les retards respectifs sont réglés sur une même valeur Y par le signal de commande YP. Les signaux de sortie Pi (P0-P9) des éléments de retard 26 sont appliqués aux bornes de commande respectives de dix bascules de test 27 échantillonnant le signal numérique D aux instants Pi pour fournir les échantillons de test correspondants DPi (DP0-DP9).

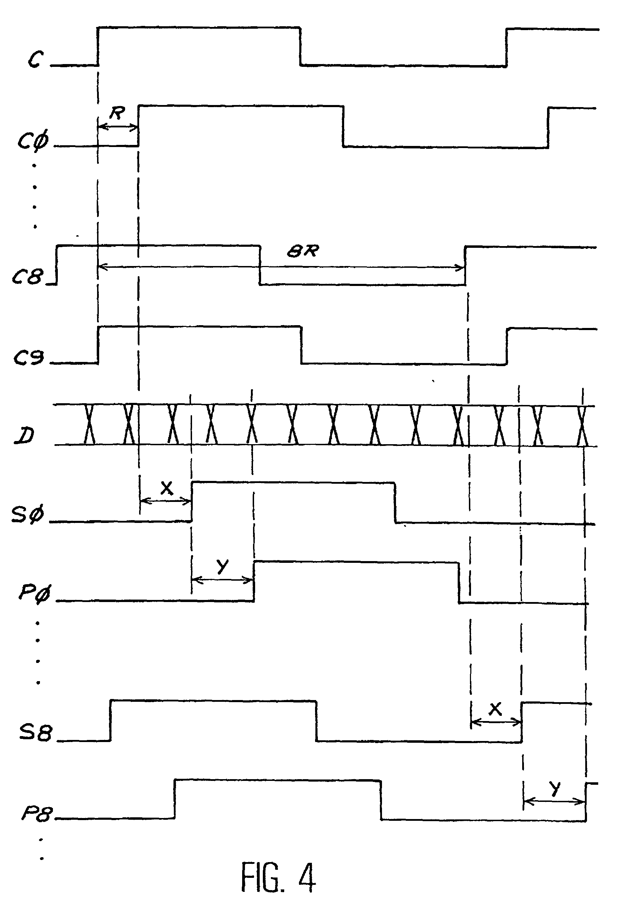

Le fonctionnement du circuit d'échantillonnage 20 va maintenant être décrit en référence au chronogrammes des figures 1 et 4. Conformément à l'enseignement des documents antérieurs précités, les retards Xi (X0-X9) qui se réfèrent dans la figure 1 au front montant du signal d'horloge C sont déterminés à partir de dix signaux d'horloge auxiliaires Ci (C0-C9) issus du signal d'horloge C par les retards égaux et successifs des éléments de retard 22 (voir figure 4). Dans ces conditions, la période T du signal d'horloge est partagée en dix retards égaux qui, lorsque le signal numérique D est exactement calé sur le signal d'horloge C, correspondent à la période de récurrence R des bits du signal numérique D, comme indiqué sur les figures 3 et 4. Dans ces conditions, le signal de commande XP règle les retards X des éléments de retard 24 de façon que la somme du retard X avec le retard du signal d'horloge auxiliaire Ci corresponde au retard Xi indiqué dans la figure 1 (Xi = Ci + X) et détermine l'instant d'échantillonnage Si. Par conséquent, si le signal numérique D est calé et synchronisé sur le signal d'horloge C comme illustré dans la figure 1, le retard X vaut 3R/2. Cependant, on notera de la figure 4 que les fronts de montée du signal d'horloge ne correspondent pas nécessairement à des transitions du signal numérique D. Dans ces conditions, le retard X s'écarte plus ou moins de cette valeur. Dans l'exemple représenté sur la figure 4, les transitions du signal numérique D sont en avance sur les fronts montants du signal d'horloge C d'une même valeur puisque le calage est par hypothèse parfait. Les instants d'échantillonnage Si se produisent donc avec la même avance, grâce à une valeur de X inférieure à 3R/2. La durée 3R/2 est donc une valeur moyenne de X.

D'autre part, les signaux de sortie Si qui définissent les instants d'échantillonnage Si sont retardés par les éléments de retard respectifs 26 de la valeur Y = 3R/2 de façon à produire les signaux Pi (figure 4) définissant les instants de test de calage Pi (figure 1). Les échantillons DPi et DSi obtenus du signal numérique D aux instants respectifs Pi et Si sont fournis comme signaux d'entrée au circuit de test de calage 10.

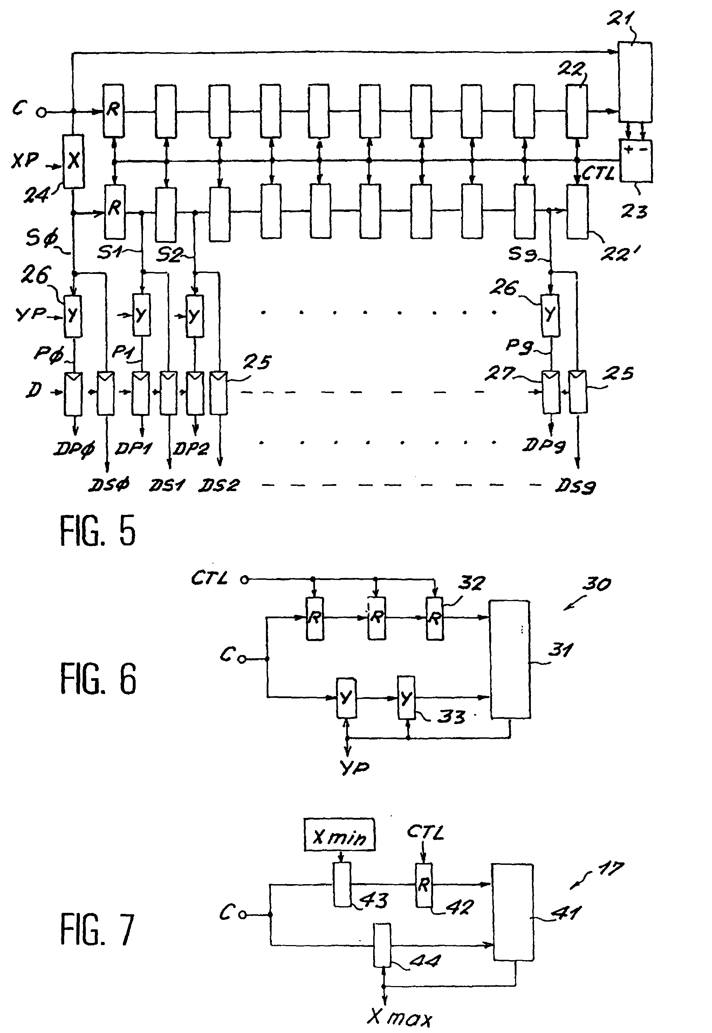

La figure 5 illustre une des variantes possibles du circuit d'échantillonnage 20. Les composants communs aux circuits 20 des figures 3 et 5 sont désignés par les mêmes chiffres de référence. Le groupe d'éléments de retard 24 de la figure 2 est réduit à un seul élément 24 et le groupe d'éléments de retard 22 de la figure 3 est dédoublé en deux groupes 22 et 22' connectés en série par l'intermédiaire de l'élément 24 et commandés par le signal de sortie CTL du compteur-décompteur 23. Les éléments de retard 22 sont connectés entre la borne d'entrée du signal d'horloge C et une entrée du comparateur de phase 21 tandis que les éléments de retard 22' fournissent à leurs entrées respectives les signaux S0-S9 appliqués aux éléments de retard 26 et aux bascules d'échantillonnage 25 et 27. Le dernier élément du groupe 22' pourrait être supprimé mais il constitue une charge analogue aux autres éléments et contribue à l'obtention de retards égaux entre les signaux S0-S9.

La figure 2 illustre la structure du circuit de test de calage 10. On a vu précédemment qu'il reçoit comme entrées les signaux d'échantillonnage DS0-DS9 et DP0-DP9. Pour des raisons de commodité, la structure du circuit de test de calage 10 représenté sur la figure 2 ne présente que la cellule 100 relative au test du calage sur la transition Pi avec i = 0. Il est clair que la même structure cellulaire se répète pour les autres valeurs de i avec la référence 10i. Selon l'exemple illustré, chaque cellule 10i du circuit 10 comprend trois portes logiques OU-Exclusif (portes XOR) 11a, 11b et 11c à deux entrées. Conformément à la description du procédé de l'invention faite en référence à la figure 1, la porte 11a reçoit les échantillons de bit DSi+1 et DSi+2 (DS1 et DS2 dans la cellule 100) et vérifie la valeur de Si+1 ⊕ Si+2. La seconde porte 11b reçoit l'échantillon DSi+1 (DS1) et le résultat fourni par la porte 11a pour vérifier si le front est montant ou descendant. La troisième porte 11c reçoit l'échantillon de test de calage DPi (ici DP0) et le signal fourni par la porte 11b pour vérifier si le front est en avance ou en retard. Si l'échantillon DSi+1 a la valeur logique 0 représentative d'un niveau bas (Si+1 = 0) et si DSi+2 a la même valeur, aucun front n'est détecté. Si DSi+2 = 1, un front est détecté et la sortie de la porte 11b a la valeur 1 traduisant un front montant. La porte 11c sort la valeur 1 traduisant un retard du front si DPi = 0 et la valeur 0 traduisant une avance de phase si DPi = 1. Si, au contraire, DSi+1 = 1, aucun front n'est détecté si DSi+2 = 1 et un front descendant est détecté lorsque DSi+2 = 0, auquel cas la porte 11a fournit la valeur 1 et la porte 11b la valeur 0. La porte 11c fournit la valeur 1 si DPi = 1 et traduit un retard de phase, et fournit la valeur 0 si DPi = 0 pour traduire une avance de phase. Par conséquent, lorsqu'un front est détecté, la sortie de la porte 1 la a la valeur 1 et la sortie de la porte 11c a la valeur 1 pour traduire un retard de phase et a la valeur 0 pour une avance de phase.

Le circuit 10 comporte un dispositif 12 permettant de ne sélectionner que la condition Si+1 ⊕ Si+2 = 1. Dans l'exemple illustré, le dispositif de sélection 12 comprend une porte XOR 12a ayant une entrée connectée à la sortie de la porte 11a et une seconde entrée recevant la valeur logique 1, et un circuit de maintien (une bascule, par exemple) 12b ayant une borne de commande connectée à la sortie de la porte 12a, une entrée connectée à la sortie de la porte 11c, et une sortie. Si un front est détecté par la porte 11a, la sortie de la porte 12a a la valeur 0 et commande le circuit de maintien 12b pour fournir une sortie égale ou inverse à son entrée. Par contre, si un front n'est pas détecté, la sortie de la porte 12a a la valeur logique 1 et commande le circuit de maintien 12b pour conserver en sortie la valeur d'entrée. Dans ces conditions, la sortie du circuit de maintien 12b est seulement représentative d'une avance ou d'un retard de phase quand une transition est détectée.

Le résultat fourni par toutes les bascules 12b des cellules 10i du circuit 10 peut servir de signal de commande XP pour régler les retards X de la figure 3 ou Xi dans la figure 1. La détection d'une avance de phase augmente alors le retard Xi et un retard de phase le diminue. Cependant, le circuit 10 de l'exemple illustré ne peut détecter qu'une avance et un retard de phase, de sorte qu'un calage de phase parfait se traduit par une succession d'avances et de retards alternés. Par conséquent, le réglage direct des retards X se traduirait par un état d'oscillation du circuit 10 et produirait une instabilité de la boucle de réglage. Afin d'éviter cet état, le réglage des retards X est commandé après une temporisation des résultats fournis par la bascule 12b. Dans l'exemple illustré, cette temporisation est faite par un comptage des bits 1 et 0 obtenus à la sortie de la bascule 12b dans une durée prédéterminée, 4T par exemple. Le circuit 10 comprend donc un compteur-décompteur 13 connecté à la sortie de la bascule 12b pour par exemple additionner les bits 1 et soustraire les bits 0 pendant quatre périodes T du signal d'horloge C et fournir le signal de commande d'échantillonnage XP au circuit d'échantillonnage 20 pour régler les retards X. Accessoirement mais avantageusement, la sortie du compteur-décompteur 13 est connectée à un dispositif à seuil 14 prévu pour déclencher un second compteur-décompteur 15 de façon à activer le calage seulement si le résultat du comptage dépasse une valeur prédéterminée.

La figure 6 illustre un exemple de génération du signal de commande YP des retards Y dans le circuit d'échantillonnage 20. Le signal de commande YP est produit par un circuit de commande 30 représenté sous forme de bloc dans la figure 2 et sous forme schématique dans la figure 6. Le circuit de commande 30 comprend : une borne d'entrée pour le signal d'horloge C et une borne d'entrée pour le signal de commande CTL produit par le compteur-décompteur 23 du circuit d'échantillonnage 20 ; un comparateur de phase 31 à deux entrées ; une première branche faite d'un nombre impair 2l + 1 d'éléments de retard 32, trois dans l'exemple illustré, effectuant chacun un retard de la période de bit R, commandés par le signal CTL et connectés en cascade entre la borne d'entrée du signal d'horloge C et une entrée du comparateur de phase 31 ; et une seconde branche faite d'un nombre pair 2m d'éléments de retard 33, deux dans l'exemple illustré, effectuant chacun un retard Y, connectés en cascade entre la borne d'entrée du signal d'horloge C et l'autre entrée du comparateur de phase 31, commandés par la sortie du comparateur de phase et fournissant le signal de réglage YP. Ainsi, le retard Y est réglé de façon que les deux branches aient le même retard. Alors, on a (2l + 1)R = 2m Y, d'où Y = [(2l + 1)/2m] R, du type désiré Y = R/2 + nR = k'R/2 où k' est un nombre entier impair positif, comme indiqué plus haut en référence à la figure 1. Dans l'exemple choisi, k' = 3.

L'invention offre donc l'avantage de faire réagir l'un sur l'autre le calage de phase et l'échantillonnage. Le réglage qui en résulte est donc beaucoup plus efficace que celui pouvant être obtenu de la technique antérieure et permet, pour un même débit, de tolérer de plus grandes marges dans la précision des horloges entre émetteurs et récepteurs. Par exemple, pour un débit de 1 gigabaud (R = 1 nanoseconde), une incrémentation de retard par pas de 50 picosecondes et une temporisation de 4T (40 nanosecondes), le système peut compenser des variations de fréquence d'horloge 50 ps (picosecondes) toutes les 40 ns (nanosecondes), c'est-à-dire des variations de l'ordre de 10⁻³, qui sont environ mille fois plus grandes que celles pouvant être compensées dans la technique antérieure. Dans ces conditions, à débit égal, le système subit moins l'influence des dispersions technologiques et des dérives fonctionnelles. Mais cela signifie aussi que le procédé de l'invention convient très bien aux plus hauts débits sans subir de contraintes dans la précision des horloges. En outre, bien que l'invention peut s'appliquer dans des systèmes de transmission très divers, elle est particulièrement bien adaptée au système décrit dans les documents précités.

Toutefois, le retard X a une gamme de variation limitée pour assurer un échantillonnage efficace et fiable. On a vu en référence à la figure 4, où par hypothèse le signal numérique D est parfaitement calé sur le signal d'horloge C, que les retards X sont alors tous égaux et que leur valeur dépend de l'avance ou du retard entre les deux signaux C et D. Dans l'exemple de la figure 4, la valeur X est inférieure à 3R/2 pour tenir compte de l'avance de phase du signal D. Cependant, si par exemple le signal numérique D a une succession de périodes égales à R - ΔR, c'est-à-dire légèrement plus courtes d'une même valeur ΔR que la période R fournie par les signaux d'horloge auxiliaires C0-C9 du signal d'horloge C, l'avance qu'a le signal D sur le signal C dans la figure 4 va progressivement croître, de sorte que les valeurs de X dans chaque période T du signal d'horloge va diminuer pour atteindre une valeur minimale Xmin prédéterminée, dépendante de nombreux facteurs, notamment technologiques. Théoriquement, Xmin peut avoir une valeur nulle, mais la réalisation de très courts retards réglables pose de nombreux problèmes qui font que la valeur moyenne choisie de X est 3R/2, et non R/2 si la fréquence du signal D est très élevée, par exemple de l'ordre du gigahertz. Si X devient négatif, cela signifie que l'horloge est trop lente et qu'un bit du signal numérique D ne peut pas être échantillonné. Inversement, une augmentation progressive de la période R accroîtrait la valeur de X jusqu'à une valeur théorique de 5R/2, au-delà de laquelle le circuit d'échantillonnage 20 lirait deux fois le même bit. On ne peut donc pas compenser une trop grande variation du calage de phase avec le circuit qui vient d'être décrit jusqu'à présent. L'invention offre aussi l'avantage de compenser les dérives extrapériodiques entre les deux signaux D et C. La compensation consiste à ajouter ou à soustraire une période de récurrence R selon que l'horloge est trop rapide ou trop lente par rapport à la période de récurrence des bits du signal numérique D, de façon que la variation de la valeur de X reste comprise dans une période de récurrence R tout en permettant la détection et la restitution correcte de tous les bits du signal numérique D. Selon l'exemple illustré dans la figure 2, les moyens de compensation incluent dans le circuit de test de calage 10 un commutateur de période 16 recevant le signal de réglage XP et fournissant un signal de commande à une entrée du second compteur-décompteur 15. Le commutateur 16 reçoit d'un dispositif de commande 17 deux signaux représentatifs des valeurs respectives Xmin et Xmax = Xmin + R.

La figure 7 représente un exemple de réalisation du circuit de commande 17, comprenant : deux bornes d'entrée pour le signal d'horloge C et le signal de commande CTL issu du circuit d'échantillonnage 20 ; un bloc fournissant un signal représentatif de la valeur minimale Xmin de X; et un comparateur de phase 41 à deux entrées reliées par deux branches respectives au signal d'horloge C, la première branche comprenant un élément de retard 42 représentatif de la période R et commandé par conséquent par le signal CTL et un élément de retard 43 produisant un retard ayant la valeur Xmin qui lui est fournie, et la seconde branche ne comprenant qu'un élément de retard 44 commandé par le signal d'erreur de phase sortant du comparateur de phase 41. L'équilibre des deux branches conduit donc l'élément de retard 44 à avoir la valeur Xmax. Il est clair que la valeur Xmax pourrait être choisie comme référence, de sorte que le circuit de commande 17 fournirait alors la valeur Xmin.

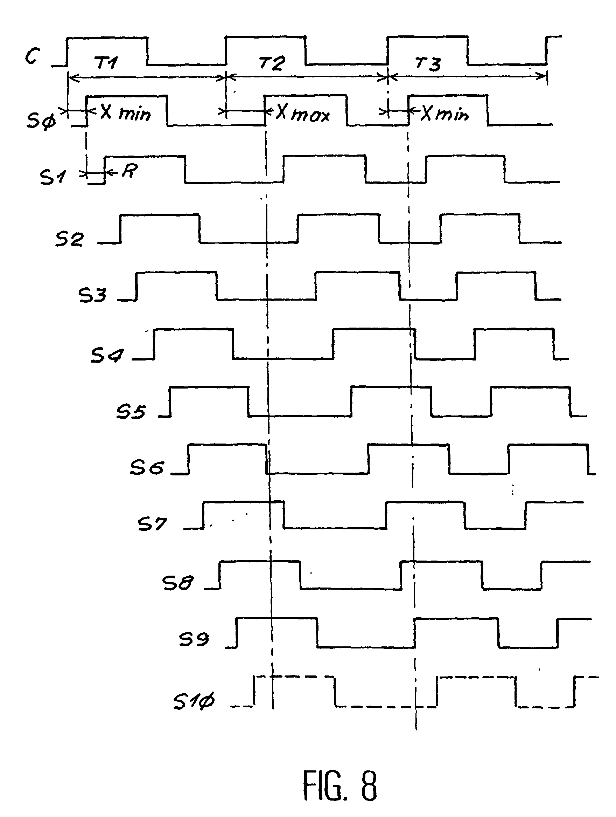

Par conséquent, si le signal de réglage XP est amené à prendre une valeur inférieure à Xmin ou à dépasser la valeur Xmax, le commutateur de période 16 effectue un décalage d'une période de récurrence R des bits, en avance ou en retard de phase si le retard XP devient respectivement inférieur à Xmin ou supérieur à Xmax. En d'autres termes, si XP devient inférieur Xmin, le commutateur 17 rend XP = Xmax, et inversement, si XP dépasse Xmax, le commutateur 17 rend XP = Xmin. Cependant, on a vu précédemment que le décalage d'une période R correspond, quand X devient inférieur à Xmin, à échantillonner deux fois le même bit du signal numérique D si l'horloge C est trop lente et se recale sur le bit précédent, de sorte que onze échantillons de bit au lieu de dix seront fournis dans la période T du signal d'horloge C et, quand X dépasse Xmax, à perdre un échantillon de bit si l'horloge est trop rapide et doit sauter une période R d'un bit du signal D pour se caler sur le bit suivant, de sorte que neuf échantillons de bit seulement seront fournis dans la période T. Cela apparaît clairement du chronogramme de la figure 8.

La figure 8 est un chronogramme illustrant le signal d'horloge C et les dix signaux d'échantillonnage Si (S0-S9) de la figure 4. Dans cet exemple, on a supposé le cas extrême, pour des raisons de commodité, que le retard XP dans la période T1 est égal à Xmin, à Xmax = Xmin + R dans la seconde période T2, et de nouveau à Xmin dans la troisième période T3. De ce chronogramme, il apparaît qu'entre les deux premiers fronts montants du signal S0, lorsque le retard passe de Xmin à Xmax, il manque un signal d'échantillonnage entre le signal S9 et le front suivant du signal S0. Selon l'invention, on ajoute un signal S10, représenté par un trait discontinu dans la figure 8, retardé de la période R par rapport au signal S9. Lorsque dans la période T suivante le retard XP passe de Xmax à Xmin, on voit que le front montant du signal S9 est synchrone avec le front montant S0 suivant, dans la période T3. Le même bit du signal D va donc être échantillonné par ces deux signaux S9 et S0. Un exemple de réalisation de l'invention en est donné dans les figures 2 et 3. Dans la figure 3, le signal d'échantillonnage S10 additionnel est obtenu, comme les signaux Si, d'un élément de retard 22 additionnel recevant le signal C9 et commandé par le signal CTL et d'un second élément de retard 24 recevant le signal de sortie du premier élément de retard 22 et commandé par le signal XP. Le signal S10 sortant de l'élément 24 commande une bascule d'échantillonnage additionnelle 25 recevant le signal D et fournissant l'échantillon DS10. Dans la figure 2, le signal de sortie du commutateur 16 est aussi appliqué à un multiplexeur 18. La fonction du multiplexeur 18 est symbolisée par le commutateur 19 indiqué à la figure 2. Le commutateur 19 permet de déconnecter le signal S9 ou d'ajouter le signal S10.

En ce qui concerne le circuit de sortie 8 du récepteur 4 de la figure 2, la délimitation des mots pour reconstituer le signal de données émis ne pose pas de problème particulier. Dans les documents précités, les mots sont séparés entre eux par une transition de synchronisation et d'horloge qui sert à les délimiter. Dans le cas présent et de manière classique, il n'existe pas de transitions servant de synchronisation et d'horloge et les données sont échantillonnées dans un ordre aléatoire, par exemple dans les bascules du désérialiseur décrit dans les documents précités. Les codes classiques définissent une séquence de reconstruction des mots, ordinairement une suite de bits qu'on ne peut jamais trouver dans une transmission normale, que l'émetteur envoie cycliquement. En reconnaissant cette séquence, le récepteur (le désérialiseur dans l'exemple présent) détermine la position des mots dans les données reçues en série et compte les bits pour former les mots. Différentes techniques existent pour la mise en oeuvre de ce procédé classique de reconstitution des mots, notamment le registre "glissant" (sliding register), le crossbar, etc.

En résumé, le procédé qui vient d'être décrit a pour caractéristique fondamentale de se référer aux instants d'échantillonnage Si pour faire le calage de phase. La forme actuellement préférée de l'invention pour faire ce calage consiste à déterminer des instants de test de calage de phase Pi se référant aux instants d'échantillonnage Si pour vérifier si des transitions du signal numérique sont en avance ou en retard de phase par rapport aux instants de test de calage Si. Cependant, cette forme n'est pas nécessaire, d'autres formes pouvant éviter la détermination d'instants de test de calage, par exemple en produisant un signal de référence se référant à des instants d'échantillonnage et à comparer ce signal avec le signal numérique D. Dans l'exemple illustré, la détermination des instants de test de calage est faite en ajoutant à chaque instant d'échantillonnage Si un retard complémentaire Y = kR/2 où k est un nombre entier impair positif non nul et R désigne la période de récurrence des bits du signal numérique D. Cette relation considère que l'échantillonnage est fait de façon classique à un instant correspondant à la demi-période R. Elle pourrait évidemment être faite dans un instant correspondant à un autre rapport. En fait, comme le calage et l'échantillonnage se rapportent l'un à l'autre, le test de calage qui est fait dans l'exemple illustré est un test d'échantillonnage qui sert au calage. On comprend que l'échantillonnage est une forme de réalisation choisie à titre d'exemple, et que d'autres formes sont possibles. On a vu aussi que dans l'exemple choisi les signaux Si sont obtenus de signaux d'horloge auxiliaires Ci et on comprend que d'autres formes d'obtention sont possibles. Dans le procédé décrit, le test de calage consiste à détecter la présence et le sens d'une transition du signal numérique et à vérifier si la valeur du signal numérique analysée à l'instant de test est celle correspondant à une avance ou un retard de phase par rapport à la transition détectée. De nombreuses variantes sont à la portée de l'homme du métier. Par exemple, au lieu de le faire sur toutes les transitions, seulement certaines peuvent être choisies, par exemple les transitions montantes et/ou une transition sur quatre. Cependant, selon d'autres formes possibles de détermination des instants de calage, telle que celle impliquant un signal de référence, le test de calage peut être indépendant du sens. D'autre part, seules les avances ou les retards de phase peuvent être pris en compte, et la temporisation peut se faire alors en référence avec le nombre total des transitions sélectionnées, par exemple, au lieu de commander le calage après une analyse d'un nombre de tests de calage. Dans l'exemple illustré, cette analyse est faite durant un nombre prédéterminé (quatre) de périodes consécutives T du signal d'horloge. On a vu que ce nombre détermine la précision des horloges à employer dans le système de transmission 1. Mais cette précision peut être aussi déterminée par les autres variantes, possibles de l'invention. Enfin, on a vu que si on veut étendre l'adaptation du système à une large gamme de variation du signal numérique par rapport au signal d'horloge, le procédé consiste à attribuer des valeurs limites aux retards X des instants d'échantillonnage et, lorsque ces valeurs limites sont dépassées, à décaler l'échantillonnage du signal numérique d'une période R de récurrence des bits de ce signal et à compenser le décalage de façon à restituer tous les bits du signal numérique. Dans l'exemple décrit, la compensation est faite par addition sélective d'un signal d'échantillonnage additionnel S10 ou par la suppression sélective du premier ou dernier signal d'échantillonnage S0 ou S9. Bien entendu, d'autres modes de réalisation sont possibles.

On a vu que le mode de réalisation illustré se rapporte à la technologie décrite dans les documents précités. Cependant, il est clair que les caractéristiques du procédé conforme à l'invention ne sont pas liées à un mode de réalisation particulier. L'invention a donc pour objet corollaire un système de transmission numérique en série 1 comprenant un émetteur 2 relié par une liaison de transmission 3 d'un signal numérique en série D à un récepteur 4 se référant à une horloge interne 6 délivrant un signal d'horloge C et des moyens de calage et d'échantillonnage 7 mettant en oeuvre le procédé de l'invention. L'horloge interne peut être extérieure au récepteur. Dans l'exemple illustré fondé sur la technologie des documents précités, les moyens de calage et d'échantillonnage 7 comprenant un circuit de test de calage 10, où les portes 11a et 11b et le dispositif de sélection 12 forment des moyens de détection d'une transition du signal numérique D, le circuit d'échantillonnage 20 forme des moyens recevant le signal d'horloge C pour la génération d'un instant prédéterminé de test de calage, la porte 11c forme des moyens de comparaison de phase connectés aux moyens de détection 11a, 11b, 12 et de génération 20 pour déterminer l'écart de phase entre l'instant de test de calage Pi et la transition, et le compteur-décompteur 13 et le dispositif à seuil 14 connectés à la sortie des moyens de comparaison 11c forment des moyens de commande des moyens de génération 20 de façon à tendre vers un calage de phase entre le signal numérique D et le signal d'horloge C. Bien sûr, d'autres formes de réalisation de tous ces moyens sont possibles et à la portée de tout homme du métier. Notamment, on a vu plus haut que la détection d'une transition peut s'accompagner de la détection du sens de la transition.

En référence à la figure 3, on peut dire d'une manière plus générale que les moyens de génération 20 comprennent un circuit verrouillé en phase composé d'un comparateur de phase 21 à deux entrées recevant respectivement le signal d'horloge direct et le signal d'horloge retardé par un premier groupe d'éléments de retard 22 en cascade représentatifs de la période de récurrence R des bits du signal numérique D, un second groupe d'éléments de retard 24 représentatifs des retards X des instants d'échantillonnage et un troisième groupe d'éléments de retard 26 représentatifs des retards Y des instants de calage, les éléments respectifs de retard des premier, second et troisième groupes étant connectés en série.

Selon la variante représentée sur la figure 5, les moyens de génération 20 comprennent un circuit verrouillé en phase composé d'un comparateur de phase 21 à deux entrées recevant respectivement le signal d'horloge direct et le signal d'horloge retardé par un premier groupe d'éléments de retard 22 en cascade représentatifs de la période de récurrence R des bits du signal numérique D, un élément de retard additionnel 24 représentatif du retard X des instants d'échantillonnage, recevant le signal d'horloge et connecté en série avec un second groupe d'éléments de retard 22' représentatifs de la période de récurrence R des bits du signal numérique D et connectés en cascade, et un troisième groupe d'éléments de retard 26 représentatifs des retards Y des instants de calage et connectés aux sorties respectives de l'élément de retard additionnel et des éléments de retard du second groupe.

On a vu aussi en référence aux figures 6 et 7 que les moyens de calage et d'échantillonnage 7 comprennent en outre des moyens pour déterminer des valeurs limites au retard des instants d'échantillonnage, des moyens pour décaler les instants d'échantillonnage d'une période R si le retard des instants d'échantillonnage atteint l'une des valeurs limites et des moyens pour compenser le décalage pour la restitution de tous les bits. La compensation comprend l'addition d'un signal d'échantillonnage. La suppression d'un signal d'échantillonnage n'est pas nécessaire, puisque le double échantillonnage pourrait se produire et être pris en compte pour la restitution correcte du signal de sortie.

L'invention a aussi pour objet corollaire un circuit intégré 5 incorporant un récepteur 4 d'un signal numérique en série D, le récepteur comprenant des moyens de calage et d'échantillonnage 7 du signal numérique qui mettent oeuvre le procédé défini précédemment et/ou sont faits comme cela est indiqué en référence au système de transmission.

## Revendications

1. Procédé d'échantillonnage d'un signal numérique en série (D) représentatif de bits récurrents à une période (R), comprenant un calage de phase du signal numérique sur un signal d'horloge (C) et un échantillonnage du signal numérique, le calage utilisant des instants de test de calage (Pi) se référant aux instants d'échantillonnage (Si), **caractérisé en ce qu'**il consiste à donner au signal d'horloge une période (T) multiple de la période de récurrence des bits du signal numérique et dans laquelle les instants d'échantillonnage se réfèrent à un même front du signal d'horloge, **en ce que** le calage de phase consiste à retarder les instants de test de calage (Pi) par rapport aux instants d'échantillonnage (Si) pour qu'ils se produisent sensiblement lors des transitions possibles respectives du signal numérique et à comparer les instants de test de calage avec les instants de transitions respectives du signal numérique pour déterminer un écart de phase entre eux, et **en ce que** l'échantillonnage consiste à régler les instants d'échantillonnage pour les retarder par rapport au signal d'horloge en fonction de l'écart de phase.

2. Procédé selon la revendication 1, **caractérisé en ce qu'**il consiste à déterminer chaque instant d'échantillonnage (Si) par rapport à un front du signal d'horloge par un retard Xi = kR/2 + iR, où k est un nombre entier impair positif non nul, i est un nombre entier positif ou nul se référant au nombre de bits du signal numérique dans chaque période (T) du signal d'horloge et R désigne la période de récurrence des bits du signal numérique (D).

3. Procédé selon la revendication 1 ou 2, **caractérisé en ce que** la détermination des instants de test de calage est faite en ajoutant à chaque instant d'échantillonnage (Si) un retard complémentaire Y = k'R/2, où k' est un nombre entier impair positif non nul et R désigne la période de récurrence des bits du signal numérique (D).

4. Procédé selon l'une des revendications 1 à 3, **caractérisé en ce que** le calage consiste en outre à régler les instants de test de calage en fonction dudit écart de phase.

5. Procédé selon l'une des revendications 2 à 4, **caractérisé en ce que** les instants de calage sont retardés à partir de transitions prédéterminées du signal d'horloge.

6. Procédé selon l'une des revendications 1 à 5, **caractérisé en ce qu'**il consiste à attribuer des valeurs limites aux retards (Xi) des instants d'échantillonnage et, lorsque ces valeurs limites sont atteintes, à décaler les instants d'échantillonnage (Si) d'une période R de récurrence des bits du signal numérique et à compenser le décalage de façon à restituer tous les bits du signal numérique.

7. Procédé selon l'une des revendications 1 à 6, **caractérisé en ce que** la détermination des instants de test de calage consiste à générer un signal de référence se référant aux instants d'échantillonnage et l'étape de comparaison consiste à comparer le signal de référence avec le signal numérique.

8. Récepteur (4) recevant d'une liaison de transmission (3) un signal numérique en série (D) représentatif de bits récurrents à une période (R) et incorporant une horloge interne (6) délivrant un signal d'horloge (C), des moyens (10) de calage du signal numérique sur le signal d'horloge et des moyens (20) d'échantillonnage du signal numérique, les moyens de calage (10) incluant des moyens pour déterminer des instants de test de calage (Pi) se référant aux instants d'échantillonnage (Si), **caractérisé en ce que** le signal d'horloge a une période (T) multiple de la période de récurrence des bits du signal numérique et dans laquelle les instants d'échantillonnage se réfèrent à un même front du signal d'horloge, **en ce que** les instants de test de calage (Pi) sont retardés par rapport aux instants d'échantillonnage pour qu'ils se produisent sensiblement lors de transitions possibles respectives du signal numérique, **en ce que** les moyens de calage (10) incluent en outre des moyens connectés aux moyens de détermination pour comparer les instants de test de calage avec les instants de transitions respectives dans le signal numérique pour déterminer un écart de phase entre eux, et **en ce que** les moyens d'échantillonnage (20) incluent des moyens connectés aux moyens de comparaison pour régler les instants d'échantillonnage en fonction de l'écart de phase.

9. Récepteur selon la revendication 8, **caractérisé en ce que** les moyens (7; 10, 20 ; fig. 3) de calage et d'échantillonnage comprennent un circuit verrouillé en phase composé d'un comparateur de phase (21) ayant des première et seconde entrées et une sortie, la première entrée (21a) recevant directement le signal d'horloge et la sortie délivrant un signal d'erreur de phase, un dispositif de commande numérique (23) connecté à la sortie du comparateur de phase et fournissant un signal de commande numérique (CTL), un premier groupe d'éléments de retard réglable (22) montés en cascade, ce premier groupe ayant une entrée pour recevoir le signal d'horloge et une sortie connectée à ladite seconde entrée (21b) du comparateur de phase, chaque élément de retard réglable (22) étant commandé par le signal de commande numérique (CTL) pour avoir un retard représentatif de la période de récurrence (R) des bits du signal numérique, un second groupe d'éléments de retard réglable (24) commandés pour fournir des sorties représentatives des instants d'échantillonnage (Si) et un troisième groupe d'éléments de retard (26) commandés pour fournir des sorties respectivement représentatives des instants de calage (Pi), les éléments de retard des premier, second et troisième groupes étant respectivement montés en série.

10. Récepteur selon la revendication 8, **caractérisé en ce que** les moyens (7; 10, 20 ; fig. 5) de calage et d'échantillonnage comprennent un circuit verrouillé en phase composé d'un comparateur de phase (21) ayant des première et seconde entrées et une sortie, la première entrée (21a) recevant directement le signal d'horloge et la sortie délivrant un signal d'erreur de phase, un dispositif de commande numérique (23) connecté à la sortie du comparateur de phase et fournissant un signal de commande numérique (CTL), un premier groupe d'éléments de retard réglable (22) montés en cascade, ce premier groupe ayant une entrée pour recevoir le signal d'horloge et une sortie connectée à ladite seconde entrée (21b) du comparateur de phase, chaque élément de retard réglable (22) étant commandé par le signal de commande numérique (CTL) pour avoir un retard représentatif de la période de récurrence (R) des bits du signal numérique, un élément de retard additionnel (24) fournissant un retard (X) représentatif du plus petit des instants d'échantillonnage, recevant le signal d'horloge et connecté en série avec un second groupe d'éléments de retard réglable (22') montés en cascade et commandés par le signal de commande numérique (CTL) pour avoir un retard représentatif de la période de récurrence (R) et fournir des sorties représentatives des instants d'échantillonnage (Si), et un troisième groupe d'éléments de retard réglable (26) commandés pour fournir des sorties représentatives des instants de calage (Pi) et connectés aux sorties respectives de l'élément de retard additionnel (24) et des éléments de retard (22') du second groupe.

11. Récepteur selon l'une des revendications 8 à 10, **caractérisé en ce que** les moyens d'échantillonnage comprennent en outre des moyens pour déterminer des valeurs limites au retard des instants d'échantillonnage, des moyens pour décaler les instants d'échantillonnage (Si) si le retard des instants d'échantillonnage atteint l'une des valeurs limites et des moyens pour compenser le décalage pour la restitution de tous les bits du signal numérique.

12. Récepteur selon l'une des revendications 8 à 11, **caractérisé en ce que** les moyens de calage comprennent en outre des moyens (30) pour régler les instants de test de calage en fonction de l'écart de phase.

13. Récepteur selon l'une des revendications 8 à 12, **caractérisé en ce qu'**il est inclus dans un circuit intégré.

14. Système de transmission (1) comprenant un émetteur (2) pour émettre dans une liaison de transmission (3) un signal numérique en série (D) représentatif de bits récurrents à une période (R) et un récepteur (4) du signal numérique en série (D), **caractérisé en ce que** le récepteur est défini par l'une des revendications 8 à 13.

## Patentansprüche

1. Verfahren zum Abtasten eines seriellen digitalen Signals (D), das rekurrente Bits mit einer Periode (R) repräsentiert, umfassend eine Einstellung der Phase des digitalen Signals auf ein Taktsignal (C) und eine Abtastung des digitalen Signals, wobei die Einstellung Einstellungstestzeitpunkte (Pi) verwendet, die sich auf Abtastzeitpunkte (Si) beziehen, **dadurch gekennzeichnet, daß** es darin besteht, dem Taktsignal eine Periode (T) zu verleihen, die ein Vielfaches der Rekurrenzperiode der Bits des digitalen Signals ist und in der sich die Abtastzeitpunkte auf dieselbe Flanke des Taktsignals beziehen, daß die Einstellung der Phase darin besteht, die Einstellungstestzeitpunkte (Pi) in bezug auf die Abtastzeitpunkte (Si) zu verzögem, damit sie im wesentlichen bei den jeweiligen möglichen Übergängen des digitalen Signals auftreten, und die Einstellungstestzeitpunkte mit den jeweiligen Übergangszeitpunkten des digitalen Signals zu vergleichen, um einen Phasenabstand zwischen ihnen festzustellen, und daß die Abtastung darin besteht, die Abtastzeitpunkte so zu steuern, daß sie in bezug auf das Taktsignal in Abhängigkeit vom Phasenabstand verzögert sind.

2. Verfahren nach Anspruch 1, **dadurch gekennzeichnet, daß** es darin besteht, jeden Abtastzeitpunkt (Si) in bezug auf eine Flanke des Taktsignals durch eine Verzögerung Xi = kR/2 + iR festzulegen, wobei k eine positive, ungerade ganze Zahl verschieden von null ist, i eine positive ganze Zahl oder null ist, die auf die Anzahl der Bits des digitalen Signals in jeder Periode (T) des Taktsignals bezogen ist, und R die Rekurrenzperiode der Bits des digitalen Signals (D) bezeichnet.

3. Verfahren nach Anspruch 1 oder 2, **dadurch gekennzeichnet, daß** die Bestimmung der Einstellungstestzeitpunkte durch Hinzufügung einer komplementären Verzögerung Y = k'R/2 zu jedem Abtastzeitpunkt (Si) erfolgt, wobei k' eine positive, ungerade ganze Zahl verschieden von null ist und R die Rekurrenzperiode der Bits des digitalen Signals (D) bezeichnet.

4. Verfahren nach einem der Ansprüche 1 bis 3, **dadurch gekennzeichnet, daß** die Einstellung außerdem darin besteht, die Einstellungstestzeitpunkte in Abhängigkeit vom Phasenabstand zu steuern.

5. Verfahren nach einem der Ansprüche 2 bis 4, **dadurch gekennzeichnet, daß** die Einstellungszeitpunkte ausgehend von vorgegebenen Übergängen des Taktsignals verzögert werden.

6. Verfahren nach einem der Ansprüche 1 bis 5, **dadurch gekennzeichnet, daß** es darin besteht, den Verzögerungen (Xi) der Abtastzeitpunkte Grenzwerte zuzuweisen und dann, wenn diese Grenzwerte erreicht werden, die Abtastzeitpunkte (Si) um eine Rekurrenzperiode R der Bits des digitalen Signals zu verschieben und die Verschiebung in der Weise auszugleichen, daß alle Bits des digitalen Signals wiederhergestellt werden.

7. Verfahren nach einem der Ansprüche 1 bis 6, **dadurch gekennzeichnet, daß** die Bestimmung der Einstellungstestzeitpunkte darin besteht, ein Referenzsignal zu erzeugen, das sich auf die Abtastzeitpunkte bezieht, und daß der Vergleichsschritt darin besteht, das Referenzsignal mit dem digitalen Signal zu vergleichen.

8. Empfänger (4), der von einer Übertragungsverbindung (3) ein serielles digitales Signal (D) empfängt, das rekurrente Bits mit einer Periode (R) repräsentiert, und der einen internen Taktgeber (6), der ein Taktsignal (C) liefert, Mittel (10) zur Einstellung des digitalen Signals auf das Taktsignal sowie Mittel (20) zum Abtasten des digitalen Signals umfaßt, wobei die Einstellungsmittel (10) Mittel enthalten, die Einstellungstestzeitpunkte (Pi) bestimmen, die auf die Abtastzeitpunkte (Si) bezogen sind, **dadurch gekennzeichnet, daß** das Taktsignal eine Periode (T) besitzt, die ein Vielfaches der Rekurrenzperiode der Bits des digitalen Signals ist und in der sich die Abtastzeitpunkte auf dieselbe Flanke des Taktsignals beziehen, daß die Einstellungstestzeitpunkte (Pi) in bezug auf die Abtastzeitpunkte verzögert sind, damit sie im wesentlichen bei den jeweiligen möglichen Übergängen des digitalen Signals auftreten, daß die Einstellungsmittel (10) außerdem Mittel enthalten, die mit den Bestimmungsmitteln verbunden sind, um die Einstellungstestzeitpunkte mit den jeweiligen Übergangszeitpunkten in dem digitalen Signal zu vergleichen, um einen Phasenabstand zwischen ihnen zu bestimmen, und daß die Abtastmittel (20) Mittel enthalten, die mit den Vergleichsmitteln verbunden sind, um die Abtastzeitpunkte in Abhängigkeit vom Phasenabstand zu steuern.

9. Empfänger nach Anspruch 8, **dadurch gekennzeichnet, daß** die Einstellungs- und Abtastmittel (7; 10, 20; Fig. 3) versehen sind mit einer phasenverriegelten Schaltung, die aus einem Phasenkomparator (21) gebildet ist, der einen ersten und einen zweiten Eingang sowie einen Ausgang besitzt, wobei der erste Eingang (21a) direkt das Taktsignal empfängt und der Ausgang ein Phasenfehlersignal liefert, einer digitalen Steuervorrichtung (23), die mit dem Ausgang des Phasenkomparators verbunden ist und ein digitales Steuersignal (CTL) liefert, einer ersten Gruppe von Elementen (22) mit einstellbarer Verzögerung, die in Kaskade geschaltet sind, wobei diese erste Gruppe einen Eingang besitzt, der das Taktsignal empfängt, und einen Ausgang besitzt, der an den zweiten Eingang (21b) des Phasenkomparators angeschlossen ist, wobei jedes Element (22) mit einstellbarer Verzögerung durch das digitale Steuersignal (CTL) gesteuert wird, damit es eine Verzögerung besitzt, die die Rekurrenzperiode (R) der Bits des digitalen Signals repräsentiert, einer zweiten Gruppe von Elementen (24) mit einstellbarer Verzögerung, die so gesteuert werden, daß sie Ausgangssignale liefern, die die Abtastzeitpunkte (Si) repräsentieren, und einer dritten Gruppe aus Verzögerungselementen (26), die so gesteuert werden, daß sie Ausgangssignale liefern, die jeweils Einstellungszeitpunkte (Pi) repräsentieren, wobei die Verzögerungselemente der ersten, der zweiten und der dritten Gruppe jeweils in Reihe geschaltet sind.

10. Empfänger nach Anspruch 8, **dadurch gekennzeichnet, daß** die Einstellungs- und Abtastmittel (7; 10, 20; Fig. 5) versehen sind mit einer phasenverriegelten Schaltung, die aus einem Phasenkomparator (21) gebildet ist, der einen ersten und einen zweiten Eingang sowie einen Ausgang besitzt, wobei der erste Eingang (21a) direkt das Taktsignal empfängt und der Ausgang ein Phasenfehlersignal liefert, einer digitalen Steuervorrichtung (23), die mit dem Ausgang des Phasenkomparators verbunden ist und ein digitales Steuersignal (CTL) liefert, einer ersten Gruppe von Elementen (22) mit einstellbarer Verzögerung, die in Kaskade geschaltet sind, wobei diese erste Gruppe einen Eingang besitzt, der das Taktsignal empfängt, und einen Ausgang besitzt, der an den zweiten Eingang (21b) des Phasenkomparators angeschlossen ist, wobei jedes Element (22) mit einstellbarer Verzögerung durch das digitale Steuersignal (CTL) gesteuert wird, damit es eine Verzögerung besitzt, die die Rekurrenzperiode (R) der Bits des digitalen Signals repräsentiert, einem zusätzlichen Verzögerungselement (24), das eine Verzögerung (X) liefert, die die kleinsten Abtastzeitpunkte repräsentiert, das das Taktsignal empfängt und das mit einer zweiten Gruppe von Elementen (22') mit einstellbarer Verzögerung, die in Kaskade geschaltet sind und durch das digitale Steuersignal (CTL) gesteuert werden, damit sie eine die Rekurrenzperiode (R) repräsentierende Verzögerung besitzen und Ausgangssignale liefern, die die Abtastzeitpunkte (Si) repräsentieren, in Reihe geschaltet ist, und einer dritten Gruppe von Elementen (26) mit einstellbarer Verzögerung, die so gesteuert werden, daß sie Ausgangssignale liefern, die die Einstellungszeitpunkte (Pi) repräsentieren, und mit den jeweiligen Ausgängen des zusätzlichen Verzögerungselements (24) bzw. der Verzögerungselemente (22') der zweiten Gruppe verbunden sind.

11. Empfänger nach einem der Ansprüche 8 bis 10, **dadurch gekennzeichnet, daß** die Abtastmittel außerdem Mittel, die Grenzwerte für die Verzögerung der Abtastzeitpunkte bestimmen, Mittel, die die Abtastzeitpunkte (Si) verschieben, falls die Verzögerung der Abtastzeitpunkte einen der Grenzwerte erreicht, und Mittel, die die Verschiebung ausgleichen, um alle Bits des digitalen Signals wiederherzustellen, umfassen.

12. Empfänger nach einem der Ansprüche 8 bis 11, **dadurch gekennzeichnet, daß** die Einstellungsmittel außerdem Mittel (30) umfassen, die die Einstellungstestzeitpunkte in Abhängigkeit vom Phasenabstand steuern.

13. Empfänger nach einem der Ansprüche 8 bis 12, **dadurch gekennzeichnet, daß** er in einer integrierten Schaltung enthalten ist.

14. Übertragungssystem (1), mit einem Sender (2), der über eine Übertragungsverbindung (3) ein serielles digitales Signal (D) sendet, das rekurrente Bits mit einer Periode (R) repräsentiert, und einem Empfänger (4) für das serielle digitale Signal (D), **dadurch gekennzeichnet, daß** der Empfänger durch einen der Ansprüche 8 bis 13 definiert ist.

## Claims

1. Method of sampling a serial digital signal (D) representative of bits recurring at a period (R), comprising phasing of the digital signal with a clock signal (C) and sampling of the digital signal, the phasing using phasing test moments (Pi) referring to the sampling moments (Si), **characterised in that** it consists in giving the clock signal a period (T) that is a multiple of the recurrence period of the bits of the digital signal and in which the sampling moments refer to the same edge of the clock signal, **in that** the phasing consists in delaying the phasing test moments (Pi) relative to the sampling moments (Si) so that they occur substantially at the respective possible transitions of the digital signal and in comparing the phasing test moments with the respective transition moments of the digital signal in order to determine a phase deviation between them, and **in that** the sampling consists in adjusting the sampling moments in order to delay them relative to the clock signal as a function of the phase deviation.

2. Method according to Claim 1, **characterised in that** it consists in determining each sampling moment (Si) relative to an edge of the clock signal by a delay Xi = kR/2 + iR, where k is a non-zero positive odd integer, i is a positive integer or zero referring to the number of bits of the digital signal in each period (T) of the clock signal and R denotes the recurrence period of the bits of the digital signal (D).

3. Method according to Claim 1 or 2, **characterised in that** the determination of the phasing test moments is performed by adding to each sampling moment (Si) an additional delay Y = k'R/2, where k' is a non-zero positive odd integer and R denotes the recurrence period of the bits of the digital signal (D).

4. Method according to one of Claims 1 to 3, **characterised in that** the phasing further consists in adjusting the phasing test moments as a function of said phase deviation.

5. Method according to one of Claims 2 to 4, **characterised in that** the phasing moments are delayed on the basis of predetermined transitions of the clock signal.

6. Method according to one of Claims 1 to 5, **characterised in that** it consists in assigning limiting values to the delays (Xi) of the sampling moments and, when these limiting values are reached, in shifting the sampling moments (Si) by a period R of recurrence of the bits of the digital signal, and in compensating for the shift so as to restore all the bits of the digital signal.

7. Method according to one of Claims 1 to 6, **characterised in that** the determination of the phasing test moments consists in generating a reference signal referring to the sampling moments and the comparison step consists in comparing the reference signal with the digital signal.

8. Receiver (4) receiving from a transmission link (3) a serial digital signal (D) representative of bits recurring at a period (R) and incorporating an internal clock (6) that supplies a clock signal (C), means (10) for phasing the digital signal with the clock signal, and means (20) for sampling the digital signal, the phasing means (10) including means for determining phasing test moments (Pi) referring to the sampling moments (Si), **characterised in that** the clock signal has a period (T) that is a multiple of the recurrence period of the bits of the digital signal and in which the sampling moments refer to the same edge of the clock signal, **in that** the phasing test moments are delayed relative to the sampling moments so that they occur substantially at respective possible transitions of the digital signal, **in that** the phasing means (10) further include means connected to the determination means in order to compare the phasing test moments with the respective transition moments of the digital signal in order to determine a phase deviation between them, and **in that** the sampling means (20) include means connected to the comparison means in order to adjust the sampling moments as a function of the phase deviation.

9. Receiver according to Claim 8, **characterised in that** the phasing and sampling means (7; 10, 20; Fig. 3) comprise a phase-locked circuit composed of a phase comparator (21) having first and second inputs and an output, the first input (21a) receiving the clock signal directly and the output supplying a phase-error signal, a digital control device (23) connected to the output of the phase comparator and supplying a digital control signal (CTL), a first group of cascaded adjustable delay elements (22), this first group having an input for receiving the clock signal and an output connected to said second input (21b) of the phase comparator, each adjustable delay element (22) being controlled by the digital control signal (CTL) so as to have a delay representative of the recurrence period (R) of the bits of the digital signal, a second group of adjustable delay elements (24) that are controlled so as to supply outputs representative of the sampling moments (Si) and a third group of delay elements (26) that are controlled so as to supply outputs respectively representative of the phasing moments (Pi), the delay elements of the first, second and third groups being connected in series, respectively.

10. Receiver according to Claim 8, **characterised in that** the phasing and sampling means (7; 10, 20; Fig. 5) comprise a phase-locked circuit composed of a phase comparator (21) having first and second inputs and an output, the first input (21a) receiving the clock signal directly and the output supplying a phase-error signal, a digital control device (23) connected to the output of the phase comparator and supplying a digital control signal (CTL), a first group of cascaded adjustable delay elements (22), this first group having an input for receiving the clock signal and an output connected to said second input (21b) of the phase comparator, each adjustable delay element (22) being controlled by the digital control signal (CTL) so as to have a delay representative of the recurrence period (R) of the bits of the digital signal, an additional delay element (24) supplying a period (X) representative of the shortest of the sampling moments, receiving the clock signal and connected in series to a second group of cascaded adjustable delay elements (22') and controlled by the digital control signal (CTL) so as to have a delay representative of the recurrence period (R) and to supply outputs representative of the sampling moments (Si), and a third group of adjustable delay elements (26) that are controlled so as to have outputs representative of the phasing moments (Pi) and connected to the respective outputs of the additional delay element (24) and of the delay elements (22') of the second group.

11. Receiver according to one of Claims 8 to 10, **characterised in that** the sampling means further comprise means for determining limiting values for the delay of the sampling moments, means for shifting the sampling moments (Si) if the delay of the sampling moments reaches one of the limiting values and means for compensating for the shift in order to restore all the bits of the digital signal.

12. Receiver according to one of Claims 8 to 11, **characterised in that** the phasing means further comprise means (30) for adjusting the phasing test moments as a function of the phase deviation.

13. Receiver according to one of Claims 8 to 12, **characterised in that** it is included in an integrated circuit.

14. Transmission system (1) comprising an emitter (2) for sending to a transmission link (3) a serial digital signal (D) representative of bits recurring at a period (R) and a receiver (4) for the serial digital signal (D), **characterised in that** the receiver is defined by one of Claims 8 to 13.
